# EUROPEAN PATENT APPLICATION

(11) **EP 4 841 748 A1**
(43) Date of publication of application: **18.11.2026**
(21) Application number: 24927991.0
(22) Date of filing: 01.08.2024
(51) Int. Cl.: H01M 10/613

(54) **CASE, BATTERY AND ELECTRIC DEVICE**

(30) Priority: 06.03.2024 CN 202420433320 U
(71) Applicant: Contemporary Amperex Technology Co., Limited, Ningde, Fujian 352100 (CN)
(72) Inventor: ZHANG, Wei, Ningde, Fujian 352100 (CN); XIAO, Yu, Ningde, Fujian 352100 (CN); SONG, Xiaobin, Ningde, Fujian 352100 (CN); ZHANG, Xiao, Ningde, Fujian 352100 (CN); WANG, Zhixiong, Ningde, Fujian 352100 (CN)
(74) Representative: Ziebig Hengelhaupt Intellectual Property Attorneys Patentanwaltskanzlei PartGmbB
(86) International application number: PCT/CN2024/109332
(87) International publication number: WO 2025/185058

(57) **Abstract**

Disclosed in the present application are a case, a battery and an electric device. The case comprises a heat exchange assembly, electrical connection assemblies and sealing assemblies. The heat exchange assembly comprises a first heat exchange plate and a second heat exchange plate, which are arranged in a stacked manner, wherein a heat exchange flow channel is provided between the first heat exchange plate and the second heat exchange plate, and the heat exchange flow channel is configured to exchange heat with battery cells. The electrical connection assemblies are connected to the heat exchange assembly, and are configured to be electrically connected to the battery cells. The sealing assemblies are arranged in the circumferential direction of each electrical connection assembly, and penetrate in the direction of the thickness of the heat exchange assembly and are connected to the first heat exchange plate and the second heat exchange plate. The sealing assemblies are arranged around the electrical connection assemblies, such that the connection strength of the heat exchange assembly near the electrical connection assemblies can be improved, the sealing performance of the heat exchange assembly is improved, and thus the operational stability of the battery is improved.

## Description

### CROSS-REFERENCE TO RELATED APPLICATIONS

The present application claims priority to Chinese Patent Application No. 202420433320.5, filed on March 6, 2024 and entitled "Case, Battery and Electric Device", which is incorporated herein by reference in its entirety.

### TECHNICAL FIELD

The present application relates to the field of batteries, and in particular, to a case, a battery and an electric device.

### BACKGROUND

Battery cells are widely used in electronic devices, such as mobile phones, notebook computers, electric bicycles, electric vehicles, electric airplanes, electric ships, electric toy cars, electric toy ships, electric toy airplanes, electric power tools, energy storage systems, and the like. The battery cells may include a nickel-cadmium battery cell, a nickel-hydrogen battery cell, a lithium-ion battery cell, a sodium-ion battery cell, a secondary alkaline zinc-manganese battery cell, and the like.

With the development of new energy technologies, how to improve sealing performance of a battery case and improve operational stability of a battery is also one of the research issues in this field.

### SUMMARY

In view of the foregoing problem, the present application provides a case, a battery and an electric device, which can improve sealing performance of a case and improve operational stability of a battery.

According to a first aspect, the present application provides a case, comprising a heat exchange assembly, an electrical connection assembly, and a sealing assembly. The heat exchange assembly comprises a first heat exchange plate and a second heat exchange plate, which are arranged in a stacked manner, wherein a heat exchange flow channel is provided between the first heat exchange plate and the second heat exchange plate, and the heat exchange flow channel is configured to exchange heat with a battery cell. The electrical connection assembly is connected to the heat exchange assembly, and is configured to be electrically connected to the battery cell. The sealing assembly is arranged in the circumferential direction of the electrical connection assembly, and penetrates in the direction of the thickness of the heat exchange assembly and is connected to the first heat exchange plate and the second heat exchange plate.

In the technical solution of the embodiment of the present application, the heat exchange assembly is provided to exchange heat with the battery cell, thereby improving heat exchange efficiency of the battery cell to improve operational stability of the battery cell; the electrical connection assembly is configured to transmit electric energy of the battery cell; and the sealing assembly is arranged around the electrical connection assembly, such that connection strength of the heat exchange assembly near the electrical connection assembly can be improved, sealing performance of the heat exchange assembly is improved, and thus operational stability of the battery is improved.

In some embodiments, the sealing assembly comprises a plurality of sealing pins arranged at intervals in the circumferential direction of the electrical connection assembly. In the foregoing technical solution, by providing the plurality of sealing pins to connect the first heat exchange plate and the second heat exchange plate, connection strength of the heat exchange assembly around the electrical connection assembly is improved, sealing performance of the heat exchange assembly is improved, an influence of the electrical connection assembly on sealing performance of the heat exchange assembly is reduced, and structural stability of the heat exchange assembly is improved.

In some embodiments, the sealing pin comprises a pin cap and a plurality of pin claws. The pin cap is arranged on the side of the heat exchange assembly facing away from the battery cell. The plurality of pin claws are arranged at intervals in the circumferential direction of the pin cap, the pin claws penetrate the heat exchange assembly in the direction of the thickness of the heat exchange assembly to connect the first heat exchange plate and the second heat exchange plate, and the pin claws and the pin cap are of an integral structure. In the foregoing technical solution, the plurality of pin claws are provided to connect the first heat exchange plate and the second heat exchange plate, which improves connection strength between the first heat exchange plate and the second heat exchange plate, and improves sealing performance of the heat exchange assembly.

In some embodiments, the case further comprises a support plate, the support plate is arranged on the side of the heat exchange assembly facing away from the battery cell, and the sealing assembly penetrates the support plate in the direction of the thickness of the support plate and is connected to the support plate and the heat exchange assembly. In the foregoing structure, by providing the support plate, support strength of the case for the battery cell is improved, and operational stability of the battery cell is improved; and the sealing assembly is connected to the support plate and the heat exchange assembly, which improves connection strength between the support plate and the heat exchange assembly, and stability of the overall structure of the case.

In some embodiments, the sealing assembly further comprises a sealing layer, and the sealing layer is arranged between the heat exchange assembly and the support plate. By providing the sealing layer, sealing performance between the support plate and the heat exchange assembly is further improved.

In some embodiments, the case further comprises a frame and a first connecting piece. The support plate and the heat exchange assembly are connected to the frame, and the frame and the heat exchange assembly jointly enclose an accommodating cavity for accommodating the battery cell. The first connecting piece connects the frame and the heat exchange plate. The sealing assembly is arranged between the electrical connection assembly and the first connecting piece. In the foregoing structure, the first connecting piece is provided to connect the frame and the case, which improves overall structural strength of the case; and the sealing assembly is arranged between the electrical connection assembly and the first connecting piece, which improves sealing performance between the electrical connection assembly and the heat exchange assembly.

In some embodiments, the case further comprises a second connecting piece, the second connecting piece is configured to connect the heat exchange assembly and the support plate, and the sealing assembly is arranged between the electrical connection assembly and the second connecting piece. By providing the second connecting piece, sealing performance between the electrical connection assembly and the support plate is improved.

In some embodiments, the electrical connection assembly comprises at least one of a connector or an output electrode base. By providing the electrical connection assembly, electric energy of the battery cell can be conducted.

According to a second aspect, the present application provides a battery, comprising the case and the battery cell in the foregoing embodiments.

According to a third aspect, the present application provides an electric device, comprising the battery in the above embodiments, and the battery is configured to provide electric energy.

The above description is merely an overview of the technical solutions of the present application. For a clearer understanding of the technical means of the present application, the present application can be carried out in accordance with the content of the description, and in order to make the above and other objectives, characteristics, and advantages of the present application apparent and comprehensible, specific embodiments of the present application are described below.

### BRIEF DESCRIPTION OF THE DRAWINGS

The feature, advantage, and technical effect of the exemplary embodiment of the present application is described below with reference to the figures.
FIG. 1 is a schematic diagram of a structure of a vehicle according to an embodiment of the present application;
FIG. 2 is a schematic diagram of an exploded structure of a battery according to an embodiment of the present application;
FIG. 3 is a schematic diagram of a structure of a battery cell according to an embodiment of the present application;
FIG. 4 is a schematic diagram of a partial structure of a case according to an embodiment of the present application;
FIG. 5 is a schematic diagram of an enlarged structure of a circle A in FIG. 4;
FIG. 6 is a schematic diagram of a structure of a section B-B in FIG. 4; and
FIG. 7 is a schematic diagram of an enlarged structure of a circle C in FIG. 6.

Detailed description of reference signs:
1: vehicle; 2: battery; 10: electrode assembly; 20: housing; 30: end cap; 40: shell; 3: controller; 4: motor; 5: case; 51: first portion; 52: second portion; 53: accommodating space; 54: support plate; 55: frame; 56: first connecting piece; 57: second connecting piece; 6: heat exchange assembly; 601: first heat exchange plate; 602: second heat exchange plate; 603: heat exchange flow channel; 7: battery cell; 8: electrical connection assembly; 801: connector; 802: output electrode base; 9: sealing assembly; 901: sealing pin; 902: pin cap; 903: pin claw.

### DETAILED DESCRIPTION OF PREFERRED EMBODIMENTS

Embodiments of the technical solutions of the present application are described in detail below with reference to the drawings. The following embodiments are only used to more clearly illustrate the technical solutions of the present application, and thus are used as examples only, and are not intended to limit the protection range of the present application.

Unless otherwise defined, all technical and scientific terms used herein have the same meaning as commonly understood by those skilled in the art to which the present application belongs. The terms used in the specification of the present application herein are merely for the purpose of describing specific embodiments and are not intended to limit the present application. The terms "include", "be provided with", and any other variants thereof in the specification, claims, and accompanying drawings of the present application are intended to cover a non-exclusive inclusion.

In the description of the embodiments of the present application, the technical terms "first", "second", and the like are used only for distinguishing between different objects, but cannot be construed to indicate or imply relative importance or implicitly indicate the number, specific order, or primary/secondary relationship of indicated technical features. In the description of the embodiments of the present application, "a plurality of" means two or more unless specifically defined otherwise.

Reference to "an embodiment" herein means that a particular feature, structure, or characteristic described with reference to the embodiment can be included in at least one embodiment of the present application. The phrase in various places in the description does not necessarily all refer to the same embodiment, or a separate or alternative embodiment mutually exclusive of other embodiments. It is explicitly and implicitly understood by a person skilled in the art that the embodiments described herein may be combined with other embodiments.

In the description of the embodiments of the present application, the term "and/or" is only an associative relationship for describing associated objects, indicating that three relationships may be present. For example, A and/or B may indicate the following three cases: presence of only A, presence of both A and B, and presence of only B. In addition, the character "/" herein generally indicates that associated objects are in a "or" relationship.

In the description of the embodiments of the present application, the term "a plurality of" means two or more (including two), and similarly, the term "a plurality of groups" means two or more groups (including two groups), and the term "a plurality of pieces" means two or more pieces (including two pieces).

In the description of the embodiments of the present application, an orientation or positional relationship indicated by technical terms "center", "longitudinal", "transverse", "length", "width", "thickness", "up", "down", "front", "back", "left", "right", "vertical", "horizontal", "top", "bottom", "inner", "outer", "clockwise", "counterclockwise", "axial", "radial", "circumferential", and the like is an orientation or positional relationship shown based on the accompanying drawings, is intended only to facilitate the description of the embodiments of the present application and simplification of the description rather than indicating or implying that an apparatus or an element indicated must have a specific orientation, or be constructed and operated in a specific orientation, and therefore is not intended to be construed as a limitation to the embodiments of the present application.

In the description of the embodiments of the present application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, and may refer to a direct connection, an indirect connection via an intermediate medium, or an internal communication between two elements or interaction between two elements. A person of ordinary skill in the art may understand the specific meanings of the above terms in the embodiments of the present application according to specific situations.

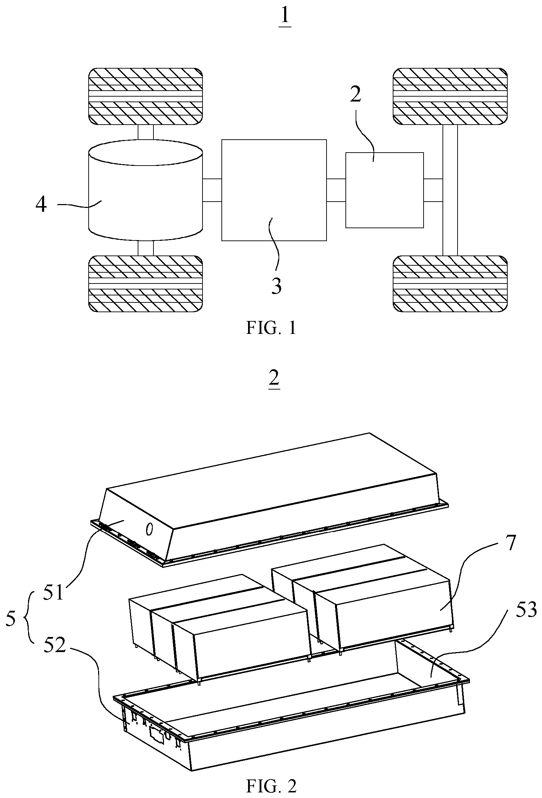

Referring to FIG. 1, FIG. 1 is a schematic diagram of a structure of a vehicle according to an embodiment of the present application. A vehicle 1 may be a fuel vehicle, a gas vehicle, or a new energy vehicle, and the new energy vehicle may be a battery electric vehicle, a hybrid vehicle, or a range-extended electric vehicle. A battery 2 is provided inside the vehicle 1. The battery 2 may be arranged at the bottom, head, or tail of the vehicle 1. The battery 2 may be configured to power the vehicle 1. For example, the battery 2 may be used as an operating power source of the vehicle 1. The vehicle 1 may further include a controller 3 and a motor 4, where the controller 3 is configured to control the battery 2 to power the motor 4, for example, for a working power requirement of the vehicle 1 during starting, navigating, and driving.

In some embodiments of the present application, the battery 2 may be used not only as the operating power source of the vehicle 1, but also as a driving power source of the vehicle 1, instead of or partially instead of fuel or natural gas to provide driving power for the vehicle 1.

In some embodiments, the battery may be an energy storage device. The energy storage device includes an energy storage container, an energy storage cabinet, and the like.

Referring to FIG. 2, FIG. 2 is an exploded view of a battery according to an embodiment of the present application. A battery 2 includes a case 5 and a battery cell 7. The battery cell 7 is accommodated in the case 5. The case 5 is configured to provide an accommodating space 53 for the battery cell 7, and the case 5 may adopt a plurality of structures.

In some optional embodiments, the case 5 includes a first portion 51 and a second portion 52, and the first portion 51 and the second portion 52 are mutually coverable to jointly define an accommodating space 53 for accommodating the battery cell 7. The second portion 52 may be of a hollow structure with an opening at one end, the first portion 51 may be of a plate-shaped structure, and the first portion 51 covers an opening side of the second portion 52, such that the first portion 51 and the second portion 52 jointly define the accommodating space 53. The first portion 51 and the second portion 52 may each be of a hollow structure with an opening on one side, with the opening side of the first portion 51 covering the opening side of the second portion 52. Certainly, the case 5 formed by the first portion 51 and the second portion 52 may be in various shapes, such as a cylinder or a cuboid.

In some embodiments, the case 5 may be used as a portion of a chassis structure of the vehicle 1. For example, a portion of the case 5 may be at least a portion of a floor of the vehicle 1, or a portion of the case 5 may be at least a portion of a cross beam and a longitudinal beam of the vehicle 1.

In some embodiments, the first portion 51 or the second portion 52 may include a frame and a cover plate, and the frame includes a plurality of beam structures.

In the battery 2, a plurality of battery cells 7 may be provided, and the plurality of battery cells 7 may be subjected to series connection, parallel connection, or series-parallel connection. The series-parallel connection means that the plurality of battery cells 7 are subjected to both series connection and parallel connection. The plurality of battery cells 7 may be directly connected in series, in parallel, or in a combination of both, and a whole composed of the plurality of battery cells 7 is accommodated in the case 5. Certainly, the battery 2 may also be formed in a manner that the plurality of battery cells 7 are subjected to series connection, parallel connection, or series-parallel connection to form battery modules, and the plurality of battery modules are then subjected to series connection, parallel connection, or series-parallel connection to form a whole, which is accommodated in the case 5. The battery 2 may further include other structures. For example, the battery 2 may further include a busbar component for implementing electrical connection between the plurality of battery cells 7.

Each battery cell 7 may be a secondary battery or a primary battery, or may be a lithium-sulfur battery, a sodium-ion battery, or a magnesium-ion battery, but is not limited thereto. The battery cell 7 may be in a shape of a cylinder, a flat body, a cuboid, or in other shapes.

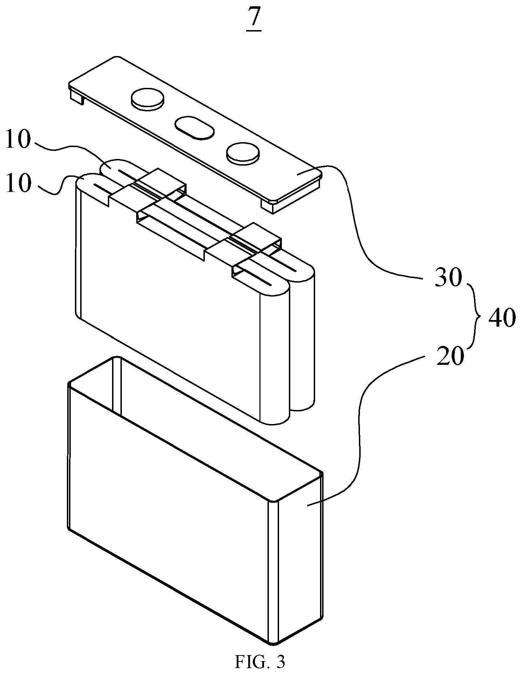

Referring to FIG. 3, FIG. 3 is a schematic diagram of a structure of a battery cell 7 according to an embodiment of the present application. The battery cell 7 refers to a minimum unit constituting the battery 2. As shown in FIG. 3, the battery cell 7 includes a shell 40, an electrode assembly 10, and other functional components.

The shell 40 includes an end cap 30 and a housing 20. The end cap 30 is a component that covers an opening of the housing 20 to isolate the internal environment of the battery cell 7 from the external environment.

The electrode assembly 10 is a component in the battery cell 7 in which an electrochemical reaction occurs. The housing 20 may include one or more electrode assemblies 10. The electrode assembly 10 includes a positive electrode sheet, a negative electrode sheet, and a spacer. During charging and discharging of the battery cell 7, active ions (such as lithium ions) are intercalated and deintercalated back and forth between the positive electrode sheet and the negative electrode sheet. The spacer is arranged between the positive electrode sheet and the negative electrode sheet to prevent positive and negative electrodes from being short-circuited and to allow active ions to pass therethrough. In some implementations, the battery cell 7 further includes an electrolyte that functions to conduct ions between the positive electrode and the negative electrode. The type of the electrolyte is not specifically limited in the present application, and may be selected according to a requirement. The electrolyte may be liquid, gel, or solid.

In some implementations, the electrode assembly 10 is of a winding structure. Optionally, the electrode assembly 10 is of a laminated structure.

It is also necessary to provide some functional components in the battery, such as a connector, which are generally composed of two or more metal plugs that can be inserted into or connected to the positive and negative electrodes of the battery cell to transfer electric energy in a circuit. The connector of the battery functions to stably and reliably connect the battery for use in an electronic device. The connector of the battery is generally of a pluggable design, allowing for easy insertion and removal of the battery without causing damage to the battery. There are also some functional components, such as an output electrode base, which is used to mount an output electrode of the battery, and the output electrode is electrically connected to the positive electrode of the battery cell to transmit electric energy of the battery cell to the outside. The foregoing functional components are generally arranged on the case of the battery. Specifically, in order to improve strength and stability of connection between the functional components and the case, some of the functional components can be inserted into the support plate or the heat exchange assembly of the case. However, sealing performance is reduced at the position of connection between the foregoing components and the heat exchange assembly, which increases the risk of liquid leakage of the heat exchange assembly.

In order to solve the foregoing problem, the present application provides a case, in which the heat exchange assembly is provided to exchange heat with the battery cell, thereby improving heat exchange efficiency of the battery cell to improve operational stability of the battery cell. The electrical connection assembly is configured to transmit electric energy of the battery cell. In addition, the sealing assembly is arranged around the electrical connection assembly, such that connection strength of the heat exchange assembly near the electrical connection assembly can be improved, sealing performance of the heat exchange assembly is improved, and thus operational stability of the battery is improved.

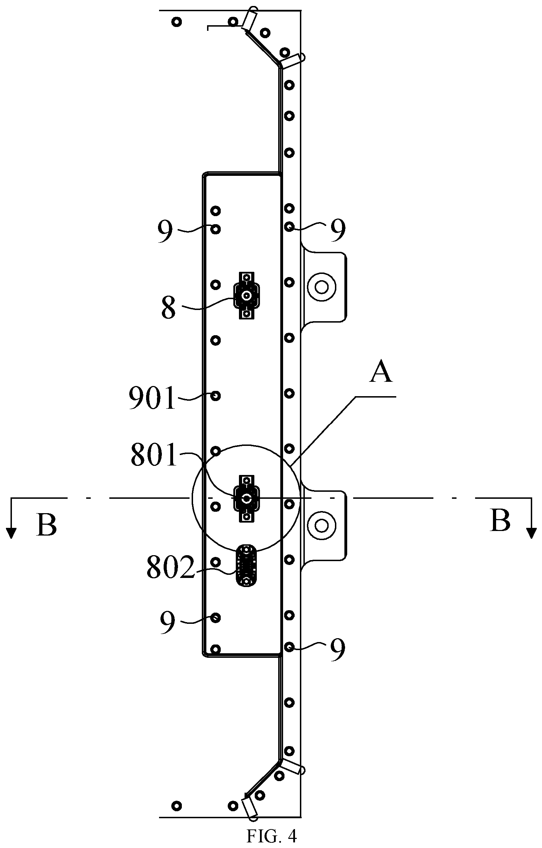

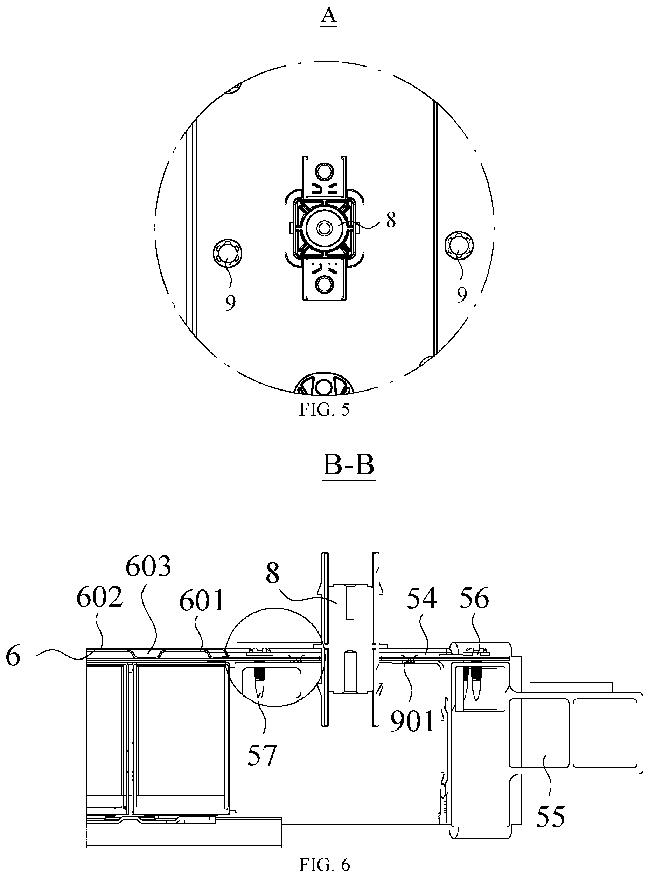

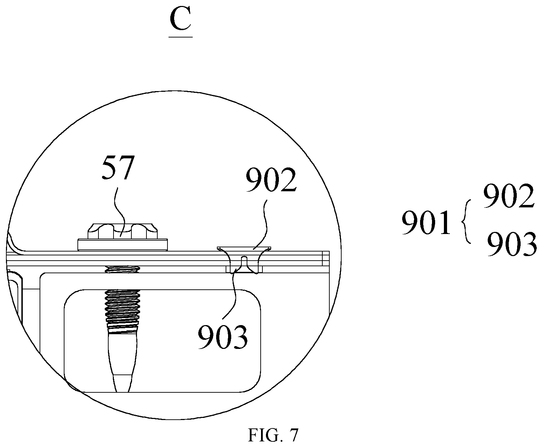

The following describes the case in embodiments of the present application in detail with reference to accompanying drawings. Referring to FIG. 4 to FIG. 7, FIG. 4 is a schematic diagram of a partial structure of a case according to an embodiment of the present application, FIG. 5 is a schematic diagram of an enlarged structure of a circle A in FIG. 4, FIG. 6 is a schematic diagram of a structure of a section B-B in FIG. 4, and FIG. 7 is a schematic diagram of an enlarged structure of a circle C in FIG. 6.

As shown in the figure, the case 5 in the embodiment of the present application includes a heat exchange assembly 6, an electrical connection assembly 8, and a sealing assembly 9. The heat exchange assembly 6 includes a first heat exchange plate 601 and a second heat exchange plate 602, which are arranged in a stacked manner. A heat exchange flow channel 603 is provided between the first heat exchange plate 601 and the second heat exchange plate 602, and the heat exchange flow channel 603 is configured to exchange heat with a battery cell 7. The electrical connection assembly 8 is connected to the heat exchange assembly 6, and the electrical connection assembly 8 is configured to be electrically connected to the battery cell 7. The sealing assembly 9 is arranged in the circumferential direction of the electrical connection assembly 8. The sealing assembly penetrates in the direction of the thickness of the heat exchange assembly 6 and is connected to the first heat exchange plate 601 and the second heat exchange plate 602.

Optionally, the heat exchange flow channel 603 may be a closed flow channel formed through the following procedure: A recessed groove is formed by stamping a metal plate for the first heat exchange plate 601 or the second heat exchange plate 602, and the two plates are then laminated and attached. Therefore, good sealing performance needs to be formed between the first heat exchange plate 601 and the second heat exchange plate 602, so as to reduce a risk of leakage of a heat exchange medium in the heat exchange flow channel 603. The sealing assembly 9 may connect the first heat exchange plate 601 and the second heat exchange plate 602 in a form of combining self-piercing rivet and sealant. Self-piercing rivet (Self-Piercing Rivet, SPR) is a cold connection process, in which two or more layers of plates made of different materials are penetrated by rivets to be connected. This process utilizes components such as punches, blank holders, dies, and rivets to pierce rivets into the plates, so that a firm mechanical internal locking structure is formed between the rivets and the first heat exchange plate 601 and between the rivets and the second heat exchange plate 602.

In the technical solution of the embodiment of the present application, the heat exchange assembly 6 is provided to exchange heat with the battery cell 7, thereby improving heat exchange efficiency of the battery cell 7 to improve operational stability of the battery cell 7; the connector 801 is configured to transmit electric energy of the battery cell 7; and the sealing assembly 9 is arranged around the electrical connection assembly 8, such that connection strength of the heat exchange assembly 6 near the electrical connection assembly 8 can be improved, sealing performance of the heat exchange assembly 6 is improved, and thus operational stability of the battery 2 is improved.

In some embodiments of the present application, the sealing assembly 9 includes a plurality of sealing pins 901 arranged at intervals in the circumferential direction of the electrical connection assembly 8. In the foregoing technical solution, by providing the plurality of sealing pins 901 to connect the first heat exchange plate 601 and the second heat exchange plate 602, connection strength of the heat exchange assembly 6 around the electrical connection assembly 8 is improved, an influence of the electrical connection assembly 8 on sealing performance of the heat exchange assembly 6 is reduced, and structural stability of the heat exchange assembly 6 is improved.

As shown in FIG. 7, in some embodiments of the present application, the sealing pin 901 includes a pin cap 902 and a plurality of pin claws 903. The pin cap 902 is arranged on the side of the heat exchange assembly 6 facing away from the battery cell 7. The plurality of pin claws 903 are arranged at intervals in the circumferential direction of the pin cap 902, the pin claws 903 penetrate the heat exchange assembly 6 in the direction of the thickness of the heat exchange assembly 6 to connect the first heat exchange plate 601 and the second heat exchange plate 602, and the pin claws 903 and the pin cap 902 are of an integral structure. In the foregoing technical solution, the plurality of pin claws 903 are provided to connect the first heat exchange plate 601 and the second heat exchange plate 602, which improves connection strength between the first heat exchange plate 601 and the second heat exchange plate 602, and improves sealing performance of the heat exchange assembly 6. Furthermore, the integral structure improves manufacturing efficiency of the sealing pin 901, thereby improving production efficiency of the battery 2.

As shown in FIG. 6, in some embodiments of the present application, the case 5 further includes a support plate 54, the support plate 54 is arranged on the side of the heat exchange assembly 6 facing away from the battery cell 7, and the sealing assembly 9 penetrates the support plate 54 in the direction of the thickness of the support plate 54 and are connected to the support plate 54 and the heat exchange assembly 6. In the foregoing structure, by providing the support plate 54, support strength of the case 5 for the battery cell 7 is improved, and operational stability of the battery cell 7 is improved; and the sealing assembly 9 is connected to the support plate 54 and the heat exchange assembly 6, which improves connection strength between the support plate 54 and the heat exchange assembly 6, and stability of the overall structure of the case 5.

In some embodiments of the present application, the sealing assembly 9 further includes a sealing layer, and the sealing layer is arranged between the heat exchange assembly 6 and the support plate 54. For example, the sealing layer includes a sealant. By providing the sealing layer, sealing performance between the support plate 54 and the heat exchange assembly 6 is further improved.

As shown in FIG. 6 and FIG. 7, in some embodiments of the present application, the case 5 further includes a frame 55 and a first connecting piece 56. The support plate 54 and the heat exchange assembly 6 are connected to the frame 55, and the frame 55 and the heat exchange assembly 6 jointly enclose an accommodating cavity for accommodating the battery cell 7. The first connecting piece 56 connects the frame 55 and the heat exchange assembly 6. The sealing assembly 9 is arranged between the electrical connection assembly 8 and the first connecting piece 56. In the foregoing structure, the first connecting piece 56 is provided to connect the frame 55 and the case 5, which improves overall structural strength of the case 5; and the sealing assembly 9 is arranged between the electrical connection assembly 8 and the first connecting piece 56, which improves sealing performance between the electrical connection assembly 8 and the heat exchange assembly 6.

In some embodiments of the present application, the case 5 further includes a second connecting piece 57, the second connecting piece 57 is configured to connect the heat exchange assembly 6 and the support plate 54, and the sealing assembly 9 is arranged between the electrical connection assembly 8 and the second connecting piece 57. By providing the second connecting piece 57, sealing performance between the electrical connection assembly 8 and the support plate 54 is improved.

Optionally, the first connecting piece 56 and the second connecting piece 57 may use an FDS integral connection structure. FDS (Friction Drive Staking) integral connection is a commonly used connection process that uses rivets to connect two or more parts together by using the friction drive principle. This process is generally used to connect metal plates. The foregoing structure has characteristics of high assembly efficiency, stable structural strength, and the like.

As shown in FIG. 4, in some embodiments of the present application, the electrical connection assembly 8 includes at least one of a connector 801 or an output electrode base 802. By providing the electrical connection assembly 8, electric energy of the battery cell 7 can be conducted.

An embodiment of the present application provides a battery 2, including the case 5 and the battery cell 7 in the above embodiment. The battery cell 7 is arranged in the case 5. An embodiment of the present application further provides an electric device including the battery 2 in the foregoing embodiment, and the battery 2 is configured to provide electric energy. In the battery 2 and the electric device, the heat exchange assembly 6 is provided to exchange heat with the battery cell 7, thereby improving heat exchange efficiency of the battery cell 7 to improve operational stability of the battery cell 7. The electrical connection assembly 8 is configured to transmit electric energy of the battery cell 7. In addition, the sealing assembly 9 is arranged around the electrical connection assembly 8, such that connection strength of the heat exchange assembly 6 near the electrical connection assembly can be improved, sealing performance of the heat exchange assembly 6 is improved, and thus operational stability of the battery 2 is improved.

Finally, it should be noted that: the above embodiments are only used to illustrate the technical solutions of the present application, but not to limit them. Although the present application has been described in detail with reference to the foregoing embodiments, those of ordinary skill in the art should understand that: they can still make modifications on the technical solutions described in the aforementioned embodiments or make equivalent replacements on some or all of the technical features; and these modifications or replacements do not make the essence of the corresponding technical solutions depart from the spirit and scope of the technical solutions of the various embodiments of the present application. All such modifications and replacements should fall within the scope of the claims and specification of the present application. In particular, the technical features mentioned in the embodiments may be combined in any manner provided that no structural conflict is present. The present application is not limited to the specific embodiments disclosed herein, but includes all technical solutions falling within the scope of the claims.

## Claims

1. A case (5), comprising:
a heat exchange assembly (6), comprising a first heat exchange plate (601) and a second heat exchange plate (602), which are arranged in a stacked manner, wherein a heat exchange flow channel (603) is provided between the first heat exchange plate (601) and the second heat exchange plate (602), and the heat exchange flow channel (603) is configured to exchange heat with a battery cell (7);
an electrical connection assembly (8) connected to the heat exchange assembly (6), wherein the electrical connection assembly (8) is configured to be electrically connected to the battery cell (7); and
a sealing assembly (9) arranged in the circumferential direction of the electrical connection assembly (8), wherein the sealing assembly (9) penetrates in the direction of the thickness of the heat exchange assembly (6) and is connected to the first heat exchange plate (601) and the second heat exchange plate (602).

2. The case (5) according to claim 1, wherein the sealing assembly (9) comprises a plurality of sealing pins (901) arranged at intervals in the circumferential direction of the electrical connection assembly (8).

3. The case (5) according to claim 2, wherein the sealing pin (901) comprises:
a pin cap (902) arranged on the side of the heat exchange assembly (6) facing away from the battery cell (7); and
a plurality of pin claws (903), wherein the plurality of pin claws (903) are arranged at intervals in the circumferential direction of the pin cap (902), the pin claws (903) penetrate the heat exchange assembly (6) in the direction of the thickness of the heat exchange assembly (6) to connect the first heat exchange plate (601) and the second heat exchange plate (602), and the pin claws (903) and the pin cap (902) are of an integral structure.

4. The case (5) according to any one of claims 1 to 3, wherein the case (5) further comprises a support plate (54), the support plate (54) is arranged on the side of the heat exchange assembly (6) facing away from the battery cell (7), and the sealing assembly (9) penetrates the support plate (54) in the direction of the thickness of the support plate (54) and is connected to the support plate (54) and the heat exchange assembly (6).

5. The case (5) according to claim 4, wherein the sealing assembly (9) further comprises a sealing layer, and the sealing layer is arranged between the heat exchange assembly (6) and the support plate (54).

6. The case (5) according to claim 4, wherein the case (5) further comprises:
a frame (55), wherein the support plate (54) and the heat exchange assembly (6) are connected to the frame (55), and the frame (55) and the heat exchange assembly (6) jointly enclose an accommodating cavity for accommodating the battery cell (7); and
a first connecting piece (56) connecting the frame (55) and the heat exchange assembly (6), wherein
the sealing assembly (9) is arranged between the electrical connection assembly (8) and the first connecting piece (56).

7. The case (5) according to claim 6, wherein the case (5) further comprises a second connecting piece (57), the second connecting piece (57) is configured to connect the heat exchange assembly (6) and the support plate (54), and the sealing assembly (9) is arranged between the electrical connection assembly (8) and the second connecting piece (57).

8. The case (5) according to any one of claims 1 to 3, wherein the electrical connection assembly (8) comprises at least one of a connector (801) or an output electrode base (802).

9. A battery (2), comprising:
the case (5) according to any one of claims 1 to 8; and
a battery cell (7) arranged within the case (5).

10. An electric device, comprising the battery (2) according to claim 9, wherein the battery (2) is configured to provide electric energy.
